# EUROPÄISCHE PATENTSCHRIFT

(11) **EP 3 922 901 B1**
(45) Veröffentlichungstag und Bekanntmachung des Hinweises auf die Patenterteilung: **04.09.2024**
(21) Anmeldenummer: 21177772.7
(22) Anmeldetag: 04.06.2021
(51) Int. Cl.: F17C 5/06

(54) **VERFAHREN ZUR HERSTELLUNG EINER DRAHTLOSEN KOMMUNIKATIONSVERBINDUNG**
METHOD OF ESTABLISHING A WIRELESS COMMUNICATION LINK
PROCÉDÉ D'ÉTABLISSEMENT D'UNE CONNEXION DE COMMUNICATION SANS FIL

(30) Priorität: 12.06.2020 DE 102020115639
(43) Veröffentlichungstag der Anmeldung: 15.12.2021
(73) Patentinhaber: Westenergie AG, 45128 Essen (DE)
(72) Erfinder: Kledewski, Ingo, 44319 Dortmund (DE); Gaul, Dr. Armin, 59379 Selm (DE)
(74) Vertreter: Bals & Vogel Patentanwälte PartGmbB

(56) Entgegenhaltungen:
- US-A1- 2013 268 130
- US-A1- 2017 074 458
- US-B2- 9 735 439

## Beschreibung

Die vorliegende Erfindung betrifft ein Verfahren, eine H₂-Tankstelle sowie ein System zur Herstellung einer drahtlosen Kommunikationsverbindung zwischen einer H₂-Tankstelle und einem wasserstoffbetriebenen Fahrzeug vor einer Betankung des wasserstoffbetriebenen Fahrzeugs an der H₂-Tankstelle.

Neben der Elektromobilität und der Verwendung von elektrischen Energiespeichern ist Wasserstoff der wohl wichtigste und vielversprechendste Energieträger für eine umweltfreundliche und nachhaltige Mobilität. Fahrzeuge, die mithilfe von Wasserstoff angetrieben werden, müssen - genau wie benzinbetriebene Fahrzeuge mit Benzin - an Tankstellen mit Wasserstoff betankt werden.

Im Hinblick auf die Vernetzung von Geräten ist es insbesondere beim Tankvorgang von H₂-Fahrzeugen vorteilhaft, wenn eine Kommunikationsverbindung zwischen einer H₂-Tankstelle und einem an die H₂-Tankstelle gekoppelten wasserstoffbetriebenen Fahrzeug besteht. Zum einen ist es dadurch möglich, dass die beteiligten Komponenten Zustandsinformationen austauschen, um mögliche Gefahren frühzeitig zu erkennen und dementsprechend reagieren zu können. Das ist vor allem im Umgang mit Wasserstoff relevant, weil dieser nicht nur explosiv ist, sondern auch durch Materialien hindurch diffundiert und demnach eine besondere Gefahrenquelle darstellt. Zum anderen ist es möglich, zusätzliche Dienstleistungen anzubieten. Beispielsweise kann ein wasserstoffbetriebenes Fahrzeug einen durchgeführten Tankvorgang ohne weitere Aktionen eines Anwenders selbstständig bezahlen. Für einen solchen Bezahlvorgang muss dem wasserstoffbetriebenen Fahrzeug allerdings bekannt sein, an welcher H₂-Tankstelle der zu bezahlende Tankvorgang durchgeführt wurde.

Eine drahtgebundene Kommunikationsverbindung ist für eine Anwendung für H₂-Tankstellen bzw. wasserstoffbetriebene Fahrzeuge allerdings ungeeignet, da sowohl die H₂-Tankstellen, als auch die wasserstoffbetriebenen Fahrzeuge hohe Anforderungen hinsichtlich der Brand- und Explosionssicherheit aufweisen müssen. Elektrische Steckkontakte von Datenleitungen sowie die Datenleitungen selbst müssten im Rahmen einer Anwendung für Wasserstoff zwingend explosionssicher ausgebildet sein, was einen großen Aufwand bedeutet und daher sehr kostenintensiv wäre.

Eine drahtlose Kommunikationsverbindung ist grundsätzlich denkbar, und beispielsweise auch aus US2013/268130A1 bekannt, jedoch muss hierfür sichergestellt werden, dass das zu betankende wasserstoffbetriebene Fahrzeug wirklich mit der H₂-Tankstelle kommunikationstechnisch verbunden ist, an die es auch mechanisch gekoppelt ist. Insbesondere bei Anlagen zur Betankung von wasserstoffbetriebenen Fahrzeugen mit mehreren H₂-Tankstellen ist ein solcher Aufbau einer drahtlosen Kommunikationsverbindung schwierig zu bewerkstelligen.

Es ist daher die Aufgabe der vorliegenden Erfindung, die voranstehend beschriebenen Nachteile zumindest teilweise zu beheben. Insbesondere ist es die Aufgabe der Erfindung, auf konstruktiv einfache Art und Weise ein komfortables, schnelles und zuverlässiges Verfahren zur Herstellung einer drahtlosen Kommunikationsverbindung zwischen einer H₂-Tankstelle und einem wasserstoffbetriebenen Fahrzeug aufzubauen bzw. einzurichten.

Die voranstehende Aufgabe wird gelöst durch ein Verfahren mit den Merkmalen des Anspruchs 1, eine H₂-Tankstelle mit den Merkmalen des Anspruchs 9 sowie ein System mit den Merkmalen des Anspruchs 14. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen H₂-Tankstelle bzw. dem erfindungsgemäßen System und umgekehrt, sodass bezüglich der Offenbarungen zu den einzelnen Erfindungsaspekten stets wechselseitig Bezug genommen wird bzw. werden kann.

Erfindungsgemäß ist ein Verfahren zur Herstellung einer drahtlosen Kommunikationsverbindung zwischen einer H₂-Tankstelle und einem wasserstoffbetriebenen Fahrzeug vor einer Betankung des wasserstoffbetriebenen Fahrzeugs an der H₂-Tankstelle vorgesehen. Hierbei umfasst das erfindungsgemäße Verfahren die Schritte eines Herstellens einer mechanischen Kopplung zwischen einem Zapfventil der H₂-Tankstelle und einer Tanköffnung des wasserstoffbetriebenen Fahrzeugs, eines Erzeugens eines diskreten Drucks innerhalb der Tanköffnung des wasserstoffbetriebenen Fahrzeugs durch die H₂-Tankstelle sowie eines Detektierens des durch die H₂-Tankstelle erzeugten diskreten Drucks durch das wasserstoffbetriebene Fahrzeug. Ferner umfasst das erfindungsgemäße Verfahren die Schritte eines Versendens eines Erkennungssignals von dem wasserstoffbetriebenen Fahrzeug an die H₂-Tankstelle, eines Detektierens des Erkennungssignals durch die H₂-Tankstelle sowie eines Durchführens eines Pairing-Vorgangs zwischen der H₂-Tankstelle und dem wasserstoffbetriebenen Fahrzeug zur Herstellung einer drahtlosen Kommunikationsverbindung zwischen der H₂-Tankstelle und dem wasserstoffbetriebenen Fahrzeug.

Das gegenständliche Verfahren kann dabei insbesondere bei einem Tankvorgang von wasserstoffbetriebenen Kraftfahrzeugen, wie beispielsweise PKWs oder LKWs zum Einsatz kommen. Ebenso ist allerdings auch ein Einsatz in Tankvorgängen für Schiffe, Flugobjekte oder auch stationären Systeme denkbar. Unter einer mechanischen Kopplung zwischen einem Zapfventil der H₂-Tankstelle und einer Tanköffnung eines wasserstoffbetriebenen Fahrzeugs kann im Rahmen der Erfindung insbesondere die Herstellung einer vorzugsweise vollständig dichtenden Verbindung zwischen dem Zapfventil der H₂-Tankstelle und der Tanköffnung des wasserstoffbetriebenen Fahrzeugs verstanden werden, wie sie vor Einleitung eines Wasserstofftankvorgangs zwingend notwendig ist. Unter einem diskreten Druck kann im Rahmen der Erfindung ferner insbesondere ein im Wesentlichen konstanter, unterscheidbarer Druck verstanden werden, der von entsprechenden Sensoren, insbesondere Drucksensoren auf einfache Weise erfassbar ist. Der diskrete Druck kann hierbei in Form eines Überdrucks oder eines Unterdrucks gebildet sein und auf verschiedene Weise erzeugt werden. So kann zur Erzeugung eines diskreten Drucks beispielsweise eine Pumpe verwendet werden, die entweder einen Druck aufbaut oder einen Unterdruck erzeugt. Bei der Erzeugung eines Überdrucks ist im Rahmen der Erfindung keine Beschränkung hinsichtlich des verwendeten Mediums bzw. Gases zur Erzeugung des Überdrucks vorgesehen. So kann ein diskreter Überdruck mittels Wasserstoffs oder auch mittels Luft oder eines anderen Gases erzeugt werden. Für den Aufbau einer Kommunikationsverbindung muss der diskrete Druck sowohl dem wasserstoffbetriebenen Fahrzeug, als auch der H₂-Tankstelle bekannt sein, beispielsweise kann ein solcher Druck standardisiert sein. Zudem versteht sich, dass unter einem diskreten Druck auch eine andere Größe verstanden werden kann, die sich entsprechend in einen diskreten Druck, beispielsweise über bekannte Gleichungen, wie das ideale Gasgesetz oder dergleichen, eindeutig umrechnen lässt. Unter einem Erkennungssignal eines wasserstoffbetriebenen Fahrzeugs kann erfindungsgemäß insbesondere ein für das betreffende Fahrzeug spezifisches Signal verstanden werden, wie eine Kennnummer, eine MAC-Adresse einer Kommunikationseinheit, eine Bluetooth-Adresse, ein Service Set Identifier (SSID), eine Fahrgestellnummer, ein Kennzeichen oder dergleichen. Unter einem Pairing-Vorgang kann im Rahmen der Erfindung ferner vorzugsweise der Prozess einer Verbindungsaufnahme zwischen zwei für eine Datenübertragung gekoppelten Datengeräten verstanden werden. Im Rahmen der Durchführung eines Pairing-Vorgangs kann sowohl das wasserstoffbetriebene Fahrzeug, als auch die H₂-Tankstelle zunächst in einen Pairing-Modus versetzt werden, in dem jeweils die Bereitschaft zum Koppeln signalisiert wird, bevor eine Kommunikationsverbindung hergestellt wird. Nach einem durchgeführten Pairing-Vorgang kann dann die Kommunikationsverbindung zwischen dem wasserstoffbetriebenen Fahrzeug und der H₂-Tankstelle hergestellt werden, sodass ein Betankungsvorgang des wasserstoffbetriebenen Fahrzeugs durch die H₂-Tankstelle durchgeführt werden kann.

Im Rahmen einer zuverlässigen Unterscheidung zwischen zufälligen Druckanstiegen und von der H₂-Tankstelle bewusst erzeugten diskreten Drücken ist erfindungsgemäss vorgesehen, dass nach einem Detektieren des durch die H₂-Tankstelle erzeugten diskreten Drucks durch das wasserstoffbetriebene Fahrzeug von dem wasserstoffbetriebenen Fahrzeug eine Zeitmessung für ein erstes vorbestimmbares Zeitintervall t_{P} gestartet wird, in dem der detektierte diskrete Druck anliegen muss, damit dieser als ein bewusst erzeugter diskreter Druck zur Herstellung einer drahtlosen Kommunikationsverbindung angesehen werden kann, wobei das erste Zeitintervall t_{P} vorzugsweise zumindest 0,5 Sekunden, besonders bevorzugt zumindest 2,5 Sekunden, insbesondere zumindest 10 Sekunden beträgt. Eine solche Zeitmessung kann beispielsweise über eine innerhalb der H₂-Tankstelle angeordnete Steuereinheit gesteuert werden. Wenn während des ersten vorbestimmbaren Zeitintervalls t_{P} stets der diskrete Druck gemessen wird, erkennt das wasserstoffbetriebene Fahrzeug bzw. die Steuereinheit des wasserstoffbetriebenen Fahrzeugs, dass die H₂-Tankstelle eine drahtlose Kommunikationsverbindung aufbauen möchte. Das erste vorbestimmbare Zeitintervall t_{P} sollte vorzugsweise so bemessen sein, dass eine fehlerhafte Detektion seitens des wasserstoffbetriebenen Fahrzeugs nahezu ausgeschlossen werden kann. Eine Messung des diskreten Drucks kann dabei insbesondere über einen innerhalb der Tanköffnung des wasserstoffbetriebenen Fahrzeugs angeordneten Sensor, vorzugsweise einen Drucksensor erfolgen.

Im Hinblick auf die Herstellung einer möglichst sicheren Kommunikation zur Verbindung zwischen einer H₂-Tankstelle und einem wasserstoffbetriebenen Fahrzeug kann erfindungsgemäß vorteilhafter Weise vorgesehen sein, dass das von dem wasserstoffbetriebenen Fahrzeug versendete Erkennungssignal eine spezifische Information über das wasserstoffbetriebene Fahrzeug umfasst, wobei die spezifische Information vorzugsweise eine Identifikationskennung des wasserstoffbetriebenen Fahrzeugs ist. Eine solche Identifikationskennung kann - wie voranstehend bereits ausgeführt - beispielsweise als Fahrgestellnummer, Tanknummer, Kennzeichen, MAC-Adresse einer Kommunikationseinheit oder dergleichen ausgeführt sein.

Um die sowohl der H₂-Tankstelle, als auch dem wasserstoffbetriebenen Fahrzeug bereits bekannten Informationen sinnvoll ausnutzen zu können und damit eine einfache und sichere Methode einer Verschlüsselung zu nutzen, kann gegenständlich ferner vorgesehen sein, dass das von dem wasserstoffbetriebenen Fahrzeug versendete Erkennungssignal von dem durch die H₂-Tankstelle erzeugten diskreten Druck abhängig ist, wobei das Erkennungssignal vorzugsweise von der Höhe des diskreten Drucks abhängt.

Um im Rahmen einer vielseitigen und flexiblen Ausführung des gegenständlichen Verfahrens auch in Systemen mit mehreren H₂-Tankstellen einsetzbar zu sein, kann gegenständlich zudem vorgesehen sein, dass das von dem wasserstoffbetriebenen Fahrzeug versendete Erkennungssignal auf einer spezifischen Trägerfrequenz, einer spezifischen Modulation and Coding Sheme (MCS) oder einer spezifischen Übertragungstechnologie basiert. Unter einer spezifischen Trägerfrequenz kann dabei insbesondere ein bestimmter Trägerkanal verstanden werden. Im Rahmen einer spezifischen Übertragungstechnologie kann erfindungsgemäß insbesondere ein bestimmter Standard, wie beispielsweise IEEE 802.11b, 802.11g oder 802.11n oder dergleichen verstanden werden. Wenn eine solche Abhängigkeit existiert, ist es möglich, dass mehrere diskrete Drücke existieren, sodass mehrere H₂-Tankstellen an einer physikalischen Lokalität vorhanden sein können. In diesem Fall könnte jeweils eine H₂-Tankstelle pseudozufällig einen diskreten Druck auswählen und verwenden. Die Wahrscheinlichkeit, dass bei einem System mit mehreren H₂-Tankstellen zwei H₂-Tankstellen zur selben Zeit einen identischen diskreten Druck verwenden, ist minimal, da potenziell eine Vielzahl von verschiedenen diskreten Drücken existiert. Somit können mehrere erfindungsgemäße Verfahren nebeneinander zeitgleich an einem Ort stattfinden ohne zu interferieren.

Im Rahmen einer einfachen und zuverlässigen Erkennung eines wasserstoffbetriebenen Fahrzeugs durch eine H₂-Tankstelle und umgekehrt, kann ferner insbesondere vorgesehen sein, dass das von dem wasserstoffbetriebenen Fahrzeug versendete Erkennungssignal von der H₂-Tankstelle gezielt auf Basis des von der H₂-Tankstelle erzeugten diskreten Drucks gesucht und/oder gefiltert wird, wobei eine Suche und/oder Filterung vorzugsweise auf Basis einer zeitlichen Einschätzung beruht, wann mit der Aussendung eines Erkennungssignals gerechnet werden kann. Dadurch, dass die H₂-Tankstelle das erfindungsgemäße Verfahren durch das Erzeugen eines diskreten Drucks aktiv eingeleitet hat, ist der H₂-Tankstelle in etwa bekannt, wann das Erkennungssignal von dem wasserstoffbetriebenen Fahrzeug ausgesendet werden müsste. So kann die H₂-Tankstelle beispielsweise nachdem der diskrete Druck eingestellt bzw. erzeugt wurde, dazu übergehen, ein Erkennungssignal von dem wasserstoffbetriebenen Fahrzeug zu detektieren. Zudem ist es -sofern das Erkennungssignal von dem erzeugten Druck abhängt - möglich, das Erkennungssignal aus mehreren möglichen drahtlosen Signalen auszuwählen bzw. zu detektieren.

Im Hinblick auf eine weitere Spezifizierung eines Kommunikationskanals zwischen einem wasserstoffbetriebenen Fahrzeug und einer H₂-Tankstelle kann gegenständlich ferner vorgesehen sein, dass das Durchführen eines Pairing-Vorgangs zwischen der H₂-Tankstelle und dem wasserstoffbetriebenen Fahrzeug auf einem spezifischen Kommunikationsstandard beruht, wobei der Kommunikationsstandard vorzugsweise ausgewählt ist aus einem der folgenden: WLAN, Bluetooth, IEE 802.11p, IEEE 1609.1-4, SAE 2735, 5G.

Um auch in dem Fall, dass keine drahtlose Kommunikationsverbindung aufgebaut werden kann, eine Entscheidung treffen zu können, ob ein Tankvorgang weitergeführt wird oder abgebrochen wird, kann gegenständlich ferner vorgesehen sein, dass nach einem Erzeugen eines diskreten Drucks durch die H₂-Tankstelle von der H₂-Tankstelle eine Zeitmessung für ein zweites vorbestimmbares Zeitintervall to gestartet wird, in dem ein Aufbau einer drahtlosen Kommunikationsverbindung zwischen der H₂-Tankstelle und einem weiteren wasserstoffbetriebenen Fahrzeug registriert werden muss, damit das Verfahren zur Herstellung einer drahtlosen Kommunikationsverbindung nicht abgebrochen wird, wobei das zweite vorbestimmbare Zeitintervall to vorzugsweise größer ist als das erste vorbestimmbare Zeitintervall t_{P}, besonders bevorzugt mindestens doppelt so groß ist wie das erste Zeitintervall t_{P}, insbesondere zumindest dreimal so groß. So kann im Falle, dass innerhalb des zweiten vorbestimmbaren Zeitintervalls t₀ keine drahtlose Kommunikationsverbindung zwischen der H₂-Tankstelle und einem wasserstoffbetriebenen Fahrzeug hergestellt werden kann, das gegenständliche Verfahren zur Herstellung einer Kommunikationsverbindung abgebrochen werden und gegebenenfalls ein standardmäßiger Tankvorgang durchgeführt werden. Ebenso ist es vorstellbar, dass in einem solchen Fall kein standardmäßiger Tankvorgang durchgeführt wird.

Im Hinblick auf eine sinnvolle Anwendung eines Aufbaus einer geschützten drahtlosen Kommunikationsverbindung zwischen einem wasserstoffbetriebenen Fahrzeug und einer H₂-Tankstelle ist es insbesondere denkbar, dass nach einem Durchführen eines Pairing-Vorgangs zwischen der H₂-Tankstelle und dem wasserstoffbetriebenen Fahrzeug und einer erfolgreichen Herstellung einer drahtlosen Kommunikationsverbindung zwischen der H₂-Tankstelle und dem wasserstoffbetriebenen Fahrzeug ein automatisierter Bezahlvorgang eingeleitet wird und/oder weitere zusätzliche Dienstleistungen von der H₂-Tankstelle angeboten werden.

Ebenfalls Gegenstand der Erfindung ist ferner eine H₂-Tankstelle zur Durchführung des voranstehend beschriebenen Verfahrens. Hierbei umfasst die erfindungsgemäße H₂-Tankstelle ein Zapfventil zur Herstellung einer mechanischen Kopplung mit einer Tanköffnung des wasserstoffbetriebenen Fahrzeugs, eine Druckerzeugungseinheit zur Erzeugung eines diskreten Drucks innerhalb der Tanköffnung des wasserstoffbetriebenen Fahrzeugs, eine Steuereinheit zur Detektion eines Erkennungssignals von dem wasserstoffbetriebenen Fahrzeug sowie eine Kommunikationseinheit zum Empfangen eines Erkennungssignals und zur Durchführung eines Pairing-Vorgangs zwischen der H₂-Tankstelle und dem wasserstoffbetriebenen Fahrzeug zur Herstellung einer drahtlosen Kommunikationsverbindung zwischen der H₂-Tankstelle und dem wasserstoffbetriebenen Fahrzeug. Damit weist die erfindungsgemäße H₂-Tankstelle die gleichen Vorteile auf, wie sie bereits ausführlich in Bezug auf das erfindungsgemäße Verfahren beschrieben worden sind. Die gegenständliche Steuereinheit der H₂-Tankstelle kann dabei wahlweise auch eine Detektionseinheit zur Detektion eines Erkennungssignals aufweisen. Die Kommunikationseinheit zur Durchführung eines Pairing-Vorgangs kann im Rahmen einer kompakten und platzsparenden Anordnung zudem auch in die Steuereinheit integriert sein.

Im Rahmen einer effektiven und gleichzeitig konstruktiv einfach implementierbaren Möglichkeit der Erzeugung eines diskreten Drucks kann gegenständlich vorteilhafter Weise vorgesehen sein, dass die Druckerzeugungseinheit einen gasbefüllten druckbelasteten Tank und/oder ein Ventil zur Einstellung eines spezifischen Drucks und/oder eine Pumpe zur Erzeugung eines Über- und/oder Unterdrucks aufweist, wobei der druckbelastete Tank vorzugsweise in Form eines mit Wasserstoff gefüllten Wasserstofftanks gebildet ist.

Im Hinblick auf eine möglichst robuste und kompakte Anordnung ist es zudem denkbar, dass eine Zapfsäule zur Aufnahme von Komponenten der H₂-Tankstelle vorgesehen ist, wobei vorzugsweise neben der Steuereinheit und der Kommunikationseinheit auch die Druckerzeugungseinheit innerhalb der Zapfsäule angeordnet ist.

Ebenso ist es zur Gewährleistung einer möglichst flexiblen Tankbefüllung vorstellbar, dass ein Gasschlauch zur Weiterleitung eines diskreten Drucks und/oder zur Überführung von Wasserstoff aus einem Wasserstofftank zu dem Zapfventil vorgesehen ist.

Im Rahmen einer benutzerfreundlichen und komfortablen Ausführung der gegenständlichen H₂-Tankstelle kann zudem ferner vorgesehen sein, dass ein Gaszähler zur Ermittlung einer bei einem Tankvorgang überführten Wasserstoffmenge sowie ein Display zur Anzeige der aktuellen überführten Wasserstoffmenge und/oder eines aktuell anfallenden Tankpreises vorgesehen ist.

Ebenfalls Gegenstand der Erfindung ist ferner ein System zur Herstellung einer drahtlosen Kommunikationsverbindung mit einem wasserstoffbetriebenen Fahrzeug vor einer Betankung des wasserstoffbetriebenen Fahrzeugs an der H₂-Tankstelle, gemäß einem voranstehend beschriebenen Verfahren. Hierbei umfasst das erfindungsgemäße System eine voranstehend beschriebenen H₂-Tankstelle sowie ein wasserstoffbetriebenes Fahrzeug, wobei sowohl die H₂-Tankstelle als auch das wasserstoffbetriebene Fahrzeug eine Kommunikationseinheit zur Herstellung einer drahtlosen Kommunikationsverbindung aufweisen, wobei die Kommunikationseinheiten derart ausgebildet sind, dass eine drahtlose Kommunikationsverbindung zwischen dem wasserstoffbetriebenen Fahrzeug und der H₂-Tankstelle auf Basis eines der folgenden Kommunikationsstandards durchführbar ist: WLAN, Bluetooth, IEEE 802.11p, IEEE 1609.1-4, SAE2735, 5G. Damit weist das erfindungsgemäße System die gleichen Vorteile auf, wie sie bereits ausführlich in Bezug auf das erfindungsgemäße Verfahren bzw. die erfindungsgemäße H₂-Tankstelle beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Hierbei können die in den Ansprüchen und in der Beschreibung erwähnten Merkmale jeweils einzeln für sich oder in beliebiger Kombination erfindungswesentlich sein.

Es zeigen:
- Fig. 1: eine schematische Darstellung der einzelnen Schritte eines erfindungsgemäßen Verfahrens zur Herstellung einer drahtlosen Kommunikationsverbindung zwischen einer H₂-Tankstelle und einem wasserstoffbetriebenen Fahrzeug vor einer Betankung des wasserstoffbetriebenen Fahrzeugs an der H₂-Tankstelle gemäß einem ersten Ausführungsbeispiel,
- Fig. 2: eine schematische Darstellung eines erfindungsgemäßen Systems zur Herstellung einer drahtlosen Kommunikationsverbindung zwischen einem wasserstoffbetriebenen Fahrzeug und einer H₂-Tankstelle vor einer Betankung des wasserstoffbetriebenen Fahrzeugs an der H₂-Tankstelle gemäß einem ersten Ausführungsbeispiel,
- Fig. 3: eine weitere schematische Darstellung der einzelnen Schritte des erfindungsgemäßen Verfahrens gemäß Fig. 1 in einer anschaulichen Darstellung,
- Fig. 4: eine schematische Darstellung eines Druckintervalls zur Erzeugung möglicher diskreter Drücke.

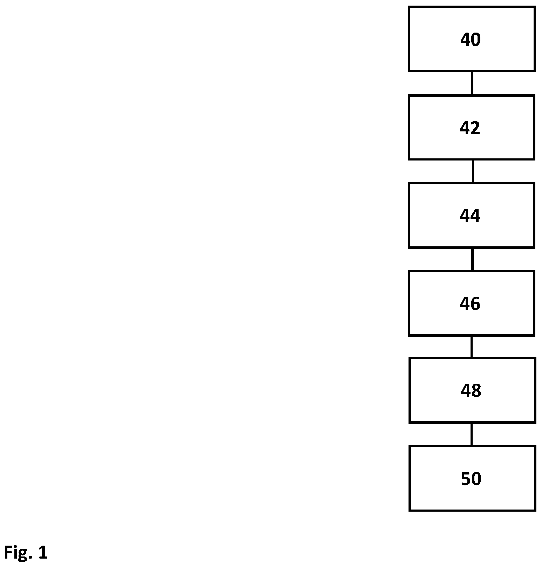

Fig. 1 zeigt eine schematische Darstellung der einzelnen Schritte eines erfindungsgemäßen Verfahrens zur Herstellung einer drahtlosen Kommunikationsverbindung 20 zwischen einer H₂-Tankstelle 4 und einem wasserstoffbetriebenen Fahrzeug 22 vor Betankung des wasserstoffbetriebenen Fahrzeugs 22 an der H₂-Tankstelle 4. Hierbei umfasst das erfindungsgemäße Verfahren die Schritte eines Herstellens 40 einer mechanischen Kopplung zwischen einem Zapfventil 10 der H₂-Tankstelle 4 und einer Tanköffnung 24 des wasserstoffbetriebenen Fahrzeugs 22, eines Erzeugens 42 eines diskreten Drucks P innerhalb der Tanköffnung 24 des wasserstoffbetriebenen Fahrzeugs 22 durch die H₂-Tankstelle 4 sowie eines Detektierens 44 des durch die H₂-Tankstelle 4 erzeugten diskreten Drucks P durch das wasserstoffbetriebene Fahrzeug 22. Ferner umfasst das erfindungsgemäße Verfahren die Schritte eines Versendens 46 eines Erkennungssignals von dem wasserstoffbetriebenen Fahrzeug 22 an die H₂-Tankstelle 4, eines Detektierens 48 des Erkennungssignals durch die H₂-Tankstelle 4 sowie eines Durchführens 50 eines Pairing-Vorgangs zwischen der H₂-Tankstelle 4 und dem wasserstoffbetriebenen Fahrzeug 22 zur Herstellung einer drahtlosen Kommunikationsverbindung 20 zwischen der H₂-Tankstelle 4 und dem wasserstoffbetriebenen Fahrzeug 22.

Das von dem wasserstoffbetriebenen Fahrzeug 22 gesendete Erkennungssignal kann hierbei insbesondere eine spezifische Information über das wasserstoffbetriebene Fahrzeug 22 umfassen, wobei die spezifische Information vorzugsweise eine Identifikationserkennung, wie eine Fahrgestellnummer, eine Tanknummer, ein Kennzeichen, eine MAC-Adresse oder dergleichen sein kann.

Ferner kann das von dem wasserstoffbetriebenen Fahrzeug 22 verwendete Erkennungssignal von dem durch die H₂-Tankstelle 4 erzeugten diskreten Druck P abhängen, wobei das Erkennungssignal vorzugsweise von der Höhe des diskreten Drucks P abhängt.

Ebenso kann das von dem wasserstoffbetriebenen Fahrzeug 22 verwendete Erkennungssignal auf einer spezifischen Trägerfrequenz, einem spezifischen Modulation and Coding Scheme (MCS) oder einer spezifischen Übertragungstechnologie basieren.

Zudem ist es vorstellbar, dass das von dem wasserstoffbetriebenen Fahrzeug 22 verwendete Erkennungssignal von der H₂-Tankstelle 4 gezielt auf Basis des von der H₂-Tankstelle 4 erzeugten diskreten Drucks P gesucht und/oder gefiltert wird, wobei eine Suche und/oder Filterung vorzugsweise auf Basis einer zeitlichen Einschätzung erfolgt, bspw einer Einschätzung, wann mit der Aussendung eines Erkennungssignals gerechnet werden kann.

Des Weiteren ist es vorstellbar, dass das Durchführen 50 eines Pairing-Vorgangs zwischen der H₂-Tankstelle 4 und dem wasserstoffbetriebenen Fahrzeug 22 auf einem spezifischen Kommunikationsstandard beruht, der beispielsweise ausgewählt sein kann aus einem WLAN-Standard, einem Bluetooth-Standard, einem IEEE 802.11b-Standard, einem IEEE 1609.1-4-Standard, einem SAE2735-Standard oder einem 5G-Standard.

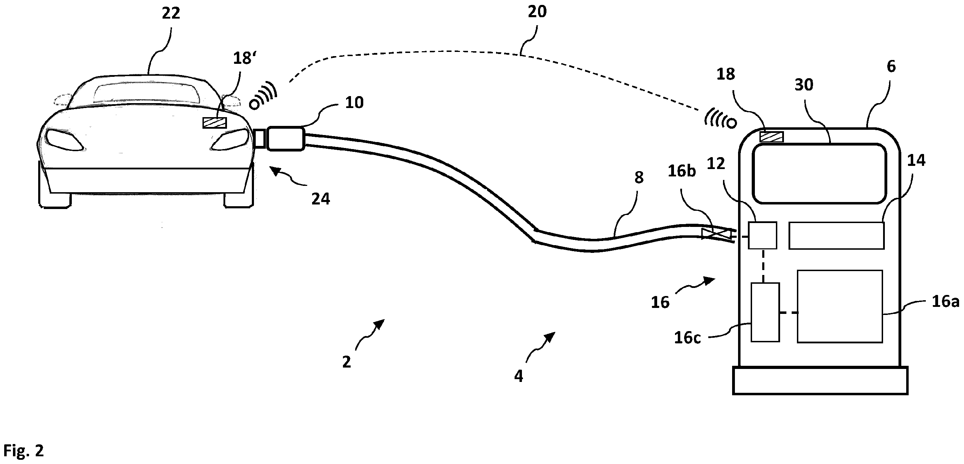

Fig. 2 zeigt eine schematische Darstellung eines erfindungsgemäßen Systems 2 zur Herstellung einer drahtlosen Kommunikationsverbindung 20 mit einem wasserstoffbetriebenen Fahrzeug 22 vor Betankung des wasserstoffbetriebenen Fahrzeugs 22 an der H₂-Tankstelle 4.

Hierbei umfasst das gegenständliche System 2 eine H₂-Tankstelle 4 sowie ein wasserstoffbetriebenes Fahrzeug 22, wobei sowohl die H₂-Tankstelle 4 als auch das wasserstoffbetriebene Fahrzeug 22 eine Kommunikationseinheit 18, 18` zur Herstellung einer drahtlosen Kommunikationsverbindung 20 aufweisen und diese derart ausgebildet sind, dass eine drahtlose Kommunikationsverbindung 20 zwischen dem wasserstoffbetriebenen Fahrzeug 22 und der H2-Tankstelle 4 auf Basis eines der folgenden Kommunikationsstandards durchführbar ist: WLAN, Bluetooth, IEEE 802.11b, IEEE 1609.1-4, SAE2735, 5G.

Die gegenständliche H₂-Tankstelle 4 umfasst hierbei ein Zapfventil 10 zur Herstellung 40 einer mechanischen Kopplung mit einer Tanköffnung 24 des wasserstoffbetriebenen Fahrzeugs 22, eine Druckerzeugungseinheit 16 zur Erzeugung 42 eines diskreten Drucks P innerhalb der Tanköffnung 24 des wasserstoffbetriebenen Fahrzeugs 22, eine Steuereinheit 14 zur Detektion 48 eines Erkennungssignals von dem wasserstoffbetriebenen Fahrzeug 22 sowie eine Kommunikationseinheit 18 zum Empfangen eines Erkennungssignals und zur Durchführung 50 eines Pairing-Vorgangs zwischen der H₂-Tankstelle 4 und dem wasserstoffbetriebenen Fahrzeug 22 zur Herstellung einer drahtlosen Kommunikationsverbindung 20 zwischen der H₂-Tankstelle 4 und dem wasserstoffbetriebenen Fahrzeug 22.

Die Druckerzeugungseinheit 16 weist hierbei einen gasbefüllten druckbelasteten Tank 16a, ein Ventil 16b zur Einstellung eines spezifischen Drucks sowie eine Pumpe 16c zur Erzeugung eines Über- und/oder Unterdrucks auf.

Ferner umfasst die H₂-Tankstelle 4 eine Zapfsäule 6, in die die meisten Komponenten der H₂-Tankstelle 4 integriert sind, d. h. neben der Druckerzeugungseinheit 16 noch die Steuereinheit 14, die Kommunikationseinheit 18 sowie ein Gaszähler 12 zur Ermittlung einer bei einem Tankvorgang überführten Wasserstoffmenge sowie ein Display 30 zur Anzeige der aktuellen überführten Wasserstoffmenge und/oder eines aktuell anfallenden Tankpreises.

Zur Weiterleitung des diskreten Drucks P und/oder zur Überführung von Wasserstoff aus der Zapfsäule 6 zum Zapfventil 10 ist ferner ein Gasschlauch 8 vorgesehen.

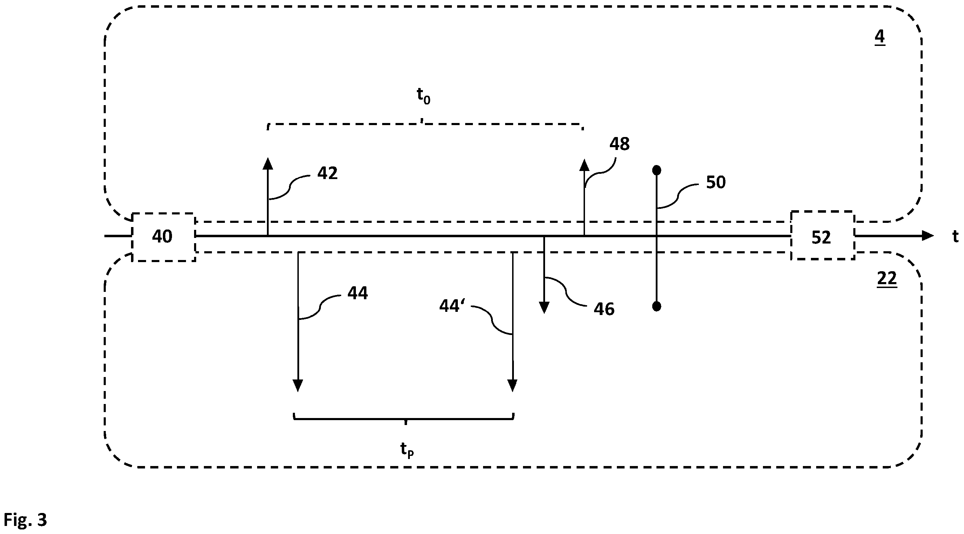

Fig. 3 zeigt eine weitere schematische Darstellung der einzelnen Schritte des erfindungsgemäßen Verfahrens in einer Ansicht, in der die einzelnen Schritte - jeweils zugeordnet zu dem den jeweiligen Schritt ausführenden Element - entlang einer Zeitachse mit einer Zeit t angeordnet sind.

Wie gemäß Fig. 3 erkennbar, startet das erfindungsgemäße Verfahren mit dem Herstellen 40 einer mechanischen Kopplung zwischen einem Zapfventil 10 der H₂-Tankstelle 4 und einer Tanköffnung 24 des wasserstoffbetriebenen Fahrzeugs 22. Nach dem Herstellen 40 der mechanischen Kopplung erfolgt seitens der H₂-Tankstelle 4 ein Erzeugen 42 eines diskreten Drucks P. Anschließend erfolgt seitens des wasserstoffbetriebenen Fahrzeugs 22 ein Detektieren 44 des durch die H₂-Tankstelle 4 erzeugten diskreten Drucks P, bevor seitens des wasserstoffbetriebenen Fahrzeugs 22 ein Versenden 46 eines Erkennungssignals an die H2-Tankstelle 4 erfolgt. Das Erkennungssignal wird seitens der H₂-Tankstelle 4 detektiert 48, bevor dann schließlich ein Durchführen 50 eines Pairing-Vorgangs zwischen der H₂-Tankstelle 4 und dem wasserstoffbetriebenen Fahrzeug 22 zur Herstellung einer drahtlosen Kommunikationsverbindung 20 zwischen der H₂-Tankstelle 4 und dem wasserstoffbetriebenen Fahrzeug 22 erfolgt. In einem optionalen abschließenden Schritt kann dann schließlich ein Einleiten 52 eines herkömmlichen Tankverfahrens erfolgen.

Wie gemäß Fig. 3 ebenfalls erkennbar ist, erfolgt nach einem Detektieren 44 des durch die H₂-Tankstelle 4 erzeugten diskreten Drucks P durch das wasserstoffbetriebene Fahrzeug 22 eine von dem wasserstoffbetriebenen Fahrzeug 22 initiierte Zeitmessung für ein erstes vorbestimmbares Zeitintervall t_{P}, in dem der detektierte diskrete Druck P anliegen muss, damit dieser als ein bewusst erzeugter diskreter Druck P zur Herstellung einer drahtlosen Kommunikationsverbindung 20 angesehen werden kann. Dieses erste Zeitintervall t_{P} kann beispielsweise 0,5 Sekunden bis zu einigen Sekunden betragen. Mithilfe eines solchen ersten Zeitintervalls t_{P} ist es möglich, zufällige Druckanstiege von einem von der H₂-Tankstelle bewusst erzeugten diskreten Druck unterscheiden zu können.

Ebenso kann auch seitens der H₂-Tankstelle nach einem Erzeugen 42 eines diskreten Drucks P eine Zeitmessung für ein zweites vorbestimmbares Zeitintervall to gestartet werden, indem ein Aufbau einer drahtlosen Kommunikationsverbindung 20 zwischen der H₂-Tankstelle 4 und einem wasserstoffbetriebenen Fahrzeug 22 registriert werden muss, damit das Verfahren zur Herstellung einer drahtlosen Kommunikationsverbindung 20 nicht abgebrochen wird. Das zweite Zeitintervall to sollte hierbei vorzugsweise größer sein als das erste Zeitintervall t_{P}.

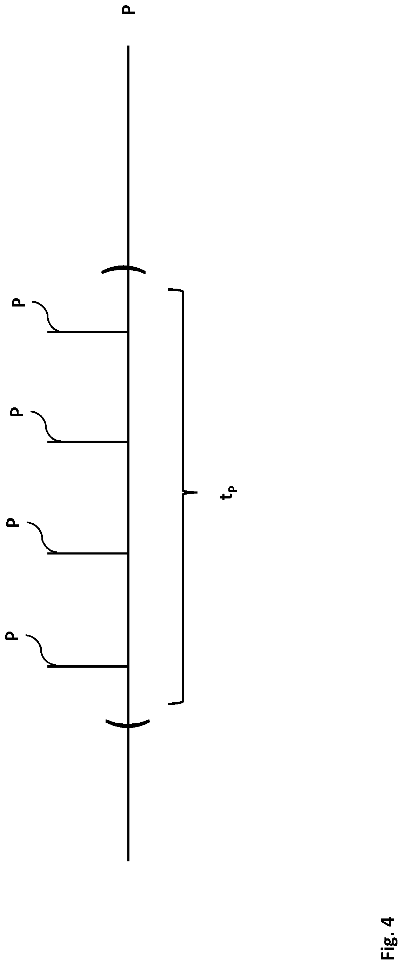

Fig. 4 zeigt eine schematische Darstellung eines Druckintervalls in dem mögliche diskrete Drücke P erzeugt werden können.

Vorliegend sind beispielsweise vier diskrete Drücke bekannt, die innerhalb eines erlaubten Intervalls I_{P} liegen. Das erlaubte Intervall kann eine Menge von Drücken umfassen, welche sich zwischen einem ersten Druck (Position der linken Klammer) und einem zweiten Druck (Position der rechten Klammer) befinden, wobei der erste Druck kleiner ist als der zweite Druck. Ein solches erlaubtes Intervall kann beispielsweise in einem Standard oder einer Norm anhand von konkreten Werten definiert sein. Dieses erlaubte Intervall I_{P} sollte so gewählt sein, dass die diskreten Drücke P in einem ersten vorbestimmbaren Zeitintervall t_{P} relativ einfach von der H₂-Tankstelle erzeugt werden können.

Mittels des erfindungsgemäßen Verfahrens, der erfindungsgemäßen H₂-Tankstelle 4 sowie des erfindungsgemäßen Systems 2 ist es insbesondere möglich, auf konstruktiv einfache Weise, eine schnelle, komfortable, zuverlässige und allen Sicherheitsanforderungen entsprechende Authentifizierung eines wasserstoffbetriebenen Fahrzeugs 22 an einer H₂-Tankstelle 4 zu ermöglichen.

### Bezugszeichenliste

- 2: System zur Herstellung einer drahtlosen Kommunikationsverbindung
- 4: H₂-Tankstelle
- 6: Zapfsäule
- 8: Gasschlauch
- 10: Zapfventil
- 12: Gaszähler
- 14: Steuereinheit
- 16: Druckerzeugungseinheit
- 16a: druckbelasteter Tank
- 16b: Ventil
- 16c: Pumpe
- 18: Kommunikationseinheit
- 18`: Kommunikationseinheit
- 20: drahtlose Kommunikationsverbindung
- 22: wasserstoffbetriebenes Fahrzeug
- 24: Tanköffnung
- 30: Display

- 40: Herstellen einer mechanischen Kopplung
- 42: Erzeugen eines diskreten Drucks
- 44: Detektieren des erzeugten diskreten Drucks
- 44`: Beenden einer Zeitmessung innerhalb eines Zeitintervalls
- 46: Versenden eines Erkennungssignals
- 48: Detektieren des Erkennungssignals
- 50: Durchführen eines Pairing-Vorgangs
- 52: Durchführen eines Betankungsvorgangs

- P: diskreter Druck
- t_{P}: erstes vorbestimmbares Zeitintervall
- t₀: zweites vorbestimmbares Zeitintervall
- I_{P}: erlaubtes Intervall von diskreten Drücken

## Patentansprüche

1. Verfahren zur Herstellung einer drahtlosen Kommunikationsverbindung (20) zwischen einer H₂-Tankstelle (4) und einem wasserstoffbetriebenen Fahrzeug (22) vor einer Betankung des wasserstoffbetriebenen Fahrzeugs (22) an der H₂-Tankstelle (4), umfassend die Schritte:
- Herstellen (40) einer mechanischen Kopplung zwischen einem Zapfventil (10) der H₂-Tankstelle (4) und einer Tanköffnung (24) des wasserstoffbetriebenen Fahrzeugs (22),
- Erzeugen (42) eines diskreten Drucks (P) innerhalb der Tanköffnung (24) des wasserstoffbetriebenen Fahrzeugs (22) durch die H₂-Tankstelle (4),
- Detektieren (44) des durch die H₂-Tankstelle (4) erzeugten diskreten Drucks (P) durch das wasserstoffbetriebene Fahrzeug (22),
- Versenden (46) eines Erkennungssignals von dem wasserstoffbetriebenen Fahrzeug (22) an die H₂-Tankstelle (4),
- Detektieren (48) des Erkennungssignals durch die H₂-Tankstelle (4),
- Durchführen (50) eines Pairing-Vorgangs zwischen der H₂-Tankstelle (4) und dem wasserstoffbetriebenen Fahrzeug (22) zur Herstellung einer drahtlosen Kommunikationsverbindung (20) zwischen der H₂-Tankstelle (4) und dem wasserstoffbetriebenen Fahrzeug (22),
- **dadurch gekennzeichnet, dass** nach einem Detektieren (44) des durch die H₂-Tankstelle (4) erzeugten diskreten Drucks (P) durch das wasserstoffbetriebene Fahrzeug (22) von dem wasserstoffbetriebenen Fahrzeug (22) eine Zeitmessung für ein erstes vorbestimmbares Zeitintervall (t_{P}) gestartet wird, in dem der detektierte diskrete Druck (P) anliegen muss, damit dieser als ein bewusst erzeugter diskreter Druck (P) zur Herstellung einer drahtlosen Kommunikationsverbindung (20) angesehen werden kann.

2. Verfahren nach Anspruch 1,
**dadurch gekennzeichnet,**
**dass** das von dem wasserstoffbetriebenen Fahrzeug (22) versendete Erkennungssignal eine spezifische Information über das wasserstoffbetriebene Fahrzeug (22) umfasst, wobei die spezifische Information vorzugsweise eine Identifikationskennung des wasserstoffbetriebenen Fahrzeugs (22) ist.

3. Verfahren nach einem der vorangehenden Ansprüche,
**dadurch gekennzeichnet,**
**dass** das von dem wasserstoffbetriebenen Fahrzeug (22) versendete Erkennungssignal von dem durch die H₂-Tankstelle (4) erzeugten diskreten Druck (P) abhängig ist, wobei das Erkennungssignal vorzugsweise von der Höhe des diskreten Drucks (P) abhängt.

4. Verfahren nach einem der vorangehenden Ansprüche,
**dadurch gekennzeichnet,**
**dass** das von dem wasserstoffbetriebenen Fahrzeug (22) versendete Erkennungssignal auf einer spezifischen Trägerfrequenz, einem spezifischen Modulation and Coding Sheme (MCS) oder einer spezifischen Übertragungstechnologie basiert.

5. Verfahren nach einem der vorangehenden Ansprüche,
**dadurch gekennzeichnet,**
**dass** das von dem wasserstoffbetriebenen Fahrzeug (22) versendete Erkennungssignal von der H₂-Tankstelle (4) gezielt auf Basis des von der H₂-Tankstelle (4) erzeugten diskreten Drucks (P) gesucht und/oder gefiltert wird.

6. Verfahren nach einem der vorangehenden Ansprüche,
**dadurch gekennzeichnet,**
**dass** das Durchführen (50) eines Pairing-Vorgangs zwischen der H₂-Tankstelle (4) und dem wasserstoffbetriebenen Fahrzeug (22) auf einem spezifischen Kommunikationsstandard beruht, wobei der Kommunikationsstandard vorzugsweise ausgewählt ist aus einem der folgenden: WLAN, Bluetooth, IEEE 802.11p, IEEE 1609.1-4, SAE2735, 5G.

7. Verfahren nach einem der vorangehenden Ansprüche,
**dadurch gekennzeichnet,**
**dass** nach einem Erzeugen (42) eines diskreten Drucks (P) durch die H₂-Tankstelle (4) von der H₂-Tankstelle (4) eine Zeitmessung für ein zweites vorbestimmbares Zeitintervall (t₀) gestartet wird, in dem ein Aufbau einer drahtlosen Kommunikationsverbindung (20) zwischen der H₂-Tankstelle (4) und einem wasserstoffbetriebenen Fahrzeug (22) registriert werden muss, damit das Verfahren zur Herstellung einer drahtlosen Kommunikationsverbindung (20) nicht abgebrochen wird.

8. Verfahren nach einem der vorangehenden Ansprüche,
**dadurch gekennzeichnet,**
**dass** nach einem Durchführen (50) eines Pairing-Vorgangs zwischen der H₂-Tankstelle (4) und dem wasserstoffbetriebenen Fahrzeug (22) und einer erfolgreichen Herstellung einer drahtlosen Kommunikationsverbindung (20) zwischen der H₂-Tankstelle (4) und dem wasserstoffbetriebenen Fahrzeug (22) ein automatisierter Bezahlvorgang eingeleitet wird und/oder weitere zusätzliche Dienstleistungen von der H₂-Tankstelle (4) angeboten werden.

9. H₂-Tankstelle (4) zur Durchführung eines Verfahrens nach einem der vorangehenden Ansprüche, umfassend:
- ein Zapfventil (10) zur Herstellung (40) einer mechanischen Kopplung mit einer Tanköffnung (24) des wasserstoffbetriebenen Fahrzeugs (22),
- eine Druckerzeugungseinheit (16) zur Erzeugung (42) eines diskreten Drucks (P) innerhalb der Tanköffnung (24) des wasserstoffbetriebenen Fahrzeugs (22),
- eine Steuereinheit (14) zur Detektion (48) eines Erkennungssignals von dem wasserstoffbetriebenen Fahrzeug (22),
- eine Kommunikationseinheit (18) zum Empfangen eines Erkennungssignals und zur Durchführung (50) eines Pairing-Vorgangs zwischen der H₂-Tankstelle (4) und dem wasserstoffbetriebenen Fahrzeug (22) zur Herstellung einer drahtlosen Kommunikationsverbindung (20) zwischen der H₂-Tankstelle (4) und dem wasserstoffbetriebenen Fahrzeug (22).

10. H₂-Tankstelle (4) nach Anspruch 9,
**dadurch gekennzeichnet,**
**dass** die Druckerzeugungseinheit (16) einen gasgefüllten druckbelasteten Tank (16a) und/oder ein Ventil (16b) zur Einstellung eines spezifischen Drucks und/oder eine Pumpe (16c) zur Erzeugung eines Über- und/oder Unterdrucks aufweist, wobei der druckbelastete Tank (16a) vorzugsweise in Form eines mit Wasserstoff gefüllten Wasserstofftanks gebildet ist.

11. H₂-Tankstelle (4) nach Anspruch 9 oder 10,
**dadurch gekennzeichnet,**
**dass** eine Zapfsäule (6) zur Aufnahme von Komponenten der H₂-Tankstelle (4) vorgesehen ist, wobei vorzugsweise neben der Steuereinheit (14) und der Kommunikationseinheit (18) auch die Druckerzeugungseinheit (16) innerhalb der Zapfsäule (6) angeordnet ist.

12. H₂-Tankstelle (4) nach Anspruch 9 bis 11,
**dadurch gekennzeichnet,**
**dass** ein Gasschlauch (8) zur Weiterleitung eines diskreten Drucks (P) und/oder zur Überführung von Wasserstoff aus einem druckbelasteten Tank (16a) zu dem Zapfventil (10) vorgesehen ist.

13. H₂-Tankstelle (4) nach Anspruch 9 bis 12,
**dadurch gekennzeichnet,**
**dass** ein Gaszähler (12) zur Ermittlung einer bei einem Tankvorgang überführten Wasserstoffmenge sowie ein Display (30) zur Anzeige der aktuell überführten Wasserstoffmenge und/oder eines aktuell anfallenden Tankpreises vorgesehen ist.

14. System (2) zur Herstellung einer drahtlosen Kommunikationsverbindung (20) gemäß einem Verfahren nach einem der Ansprüche 1 bis 8, umfassend:
- eine H₂-Tankstelle (4) nach einem der Ansprüche 9 bis 13,
- ein wasserstoffbetriebenes Fahrzeug (22),
- wobei sowohl die H₂-Tankstelle (4) als auch das wasserstoffbetriebene Fahrzeug (22) eine Kommunikationseinheit (18, 18') zur Herstellung einer drahtlosen Kommunikationsverbindung (20) aufweisen, wobei die Kommunikationseinheiten (18, 18') derart ausgebildet sind, dass eine drahtlose Kommunikationsverbindung (20) zwischen dem wasserstoffbetriebenen Fahrzeug (22) und der H₂-Tankstelle (4) auf Basis eines der folgenden Kommunikationsstandards durchführbar ist: WLAN, Bluetooth, IEEE 802.11p, IEEE 1609.1-4, SAE2735, 5G.

## Claims

1. Method of establishing a wireless communication link (20) between a H₂-filling station (4) and a hydrogen-powered vehicle (22) prior to refueling the hydrogen-powered vehicle (22) at the H₂-filling station (4), comprising the steps of:
- establishing (40) a mechanical coupling between a tap valve (10) of the H₂-filling station (4) and a tank opening (24) of the hydrogen-powered vehicle (22),
- generating (42) a discrete pressure (P) within the tank opening (24) of the hydrogen-powered vehicle (22) by the H₂-filling station (4),
- detection (44) of the H₂-filling station (4) by the hydrogen-powered vehicle (22),
- sending (46) a detection signal from the hydrogen-powered vehicle (22) to the H₂-filling station (4),
- detection (48) of the detection signal by the H₂-filling station (4),
- performing (50) a pairing process between the H₂-filling station (4) and the hydrogen-powered vehicle (22) to establish a wireless communication link (20) between the H₂-filling station (4) and the hydrogen-powered vehicle (22),
- **characterized in that**
after detection (44) of the H₂-filling station (4) by the hydrogen-powered vehicle (22), the hydrogen-powered vehicle (22) performs a time measurement for a first predeterminable time interval (t_{P}) in which the detected discrete pressure (P) must be present so that it can be regarded as a deliberately generated discrete pressure (P) for establishing a wireless communication link (20).

2. Method according to claim 1,
**characterized in that**
the detection signal sent by the hydrogen-powered vehicle (22) comprises specific information about the hydrogen-powered vehicle (22), the specific information preferably being an identification identifier of the hydrogen-powered vehicle (22).

3. Method according to any one of the preceding claims,
**characterized in that**
the detection signal sent by the hydrogen-powered vehicle (22) differs from the detection signal sent by the H₂-filling station (4), the detection signal being preferably dependent on the level of the discrete pressure (P).

4. Method according to any one of the preceding claims,
**characterized in that**
the detection signal transmitted by the hydrogen-powered vehicle (22) is based on a specific carrier frequency, a specific modulation and coding scheme (MCS) or a specific transmission technology.

5. Method according to any one of the preceding claims,
**characterized in that**
the detection signal sent by the hydrogen-powered vehicle (22) is received by the H₂-filling station (4) on the basis of the H₂-filling station (4) is searched for and/or filtered on the basis of the discrete pressure (P) generated by the H₂-filling station (4).

6. Method according to any one of the preceding claims,
**characterized in that**
performing (50) a pairing operation between the H₂-filling station (4) and the hydrogen-powered vehicle (22) is based on a specific communication standard, wherein the communication standard is preferably selected from one of the following: WLAN, Bluetooth, IEEE 802.11p, IEEE 1609.14, SAE2735, 5G.

7. Method according to any one of the preceding claims,
**characterized in that**
after generating (42) a discrete pressure (P) by the H₂-filling station (4), the H₂-filling station (4) starts a time measurement for a second predeterminable time interval (t₀) in which a wireless communication link (20) is established between the H₂-filling station (4) and a hydrogen-powered vehicle (22) must be registered so that the method for establishing a wireless communication link (20) is not interrupted.

8. Method according to any one of the preceding claims,
**characterized in that**
after performing (50) a pairing operation between the H₂-filling station (4) and the hydrogen-powered vehicle (22) and successfully establishing a wireless communication link (20) between the H₂-filling station (4) and the hydrogen-powered vehicle (22), an automated payment process is initiated and/or further additional services are provided by the H₂-filling station (4).

9. H₂-filling station (4) for carrying out a method according to any one of the preceding claims, comprising:
- a tap valve (10) for establishing (40) a mechanical coupling with a tank opening (24) of the hydrogen-powered vehicle (22),
- a pressure generating unit (16) for generating (42) a discrete pressure (P) within the tank opening (24) of the hydrogen-powered vehicle (22),
- a control unit (14) for detecting (48) a detection signal from the hydrogen-powered vehicle (22),
- a communication unit (18) for receiving a detection signal and performing (50) a pairing operation between the H₂-filling station (4) and the hydrogen-powered vehicle (22) to establish a wireless communication link (20) between the H₂-filling station (4) and the hydrogen-powered vehicle (22).

10. H₂-filling station (4) according to claim 9,
**characterized in that**
the pressure-generating unit (16) has a gas-filled pressurized tank (16a) and/or a valve (16b) for setting a specific pressure and/or a pump (16c) for generating an overpressure and/or underpressure, the pressurized tank (16a) preferably being in the form of a hydrogen tank filled with hydrogen.

11. H₂-filling station (4) according to claim 9 or 10,
**characterized in that**
a dispenser (6) for receiving components of the H₂-filling station (4) is provided, the pressure generating unit (16) preferably also being arranged inside the dispenser (6) in addition to the control unit (14) and the communication unit (18).

12. H₂-filling station (4) according to claims 9 to 11,
**characterized in that**
a gas hose (8) is provided for passing on a discrete pressure (P) and/or for transferring hydrogen from a pressurized tank (16a) to the tap valve (10).

13. H2-filling station (4) according to claims 9 to 12,
**characterized in that**
a gas meter (12) is provided for determining a quantity of hydrogen transferred during a refuelling operation and a display (30) is provided for displaying the quantity of hydrogen currently transferred and/or a tank price currently incurred.

14. A system (2) for establishing a wireless communication link (20) according to a method according to any one of the preceding claims 1 to 8, comprising:
- a H₂-filling station (4) according to any one of claims 9 to 13,
- a hydrogen-powered vehicle (22),
- whereby both the H₂-filling station (4) and the hydrogen-powered vehicle (22) having a communication unit (18, 18') for establishing a wireless communication link (20), wherein the communication units (18, 18') are configured such that a wireless communication link (20) is established between the hydrogen-powered vehicle (22) and the H₂-filling station (4) on the basis of one of the following communication standards: WLAN, Bluetooth, IEEE 802.11p, IEEE 1609.1-4, SAE2735, 5G.

## Revendications

1. Procédé d'établissement d'une liaison de communication sans fil (20) entre une station-service H₂ (4) et un véhicule à hydrogène (22) avant un ravitaillement du véhicule à hydrogène (22) à la station-service H₂ (4), comprenant les étapes consistant à :
- Établissement (40) d'un couplage mécanique entre un robinet de soutirage (10) de la station-service H₂ (4) et une ouverture de réservoir (24) du véhicule à hydrogène (22),
- Génération (42) d'une pression discrète (P) à l'intérieur de l'ouverture de réservoir (24) du véhicule à hydrogène (22) par la station-service H₂ (4),
- Détection (44) de la quantité de pression discrète (P) générée par la station-service H₂ (4) par le véhicule à hydrogène (22),
- L'envoi (46) d'un signal de reconnaissance par le véhicule à hydrogène (22) à la station-service H₂ (4),
- Détection (48) du signal de reconnaissance par la station-service H₂ (4),
- Effectuer (50) une opération d'appairage entre la station-service H₂ (4) et le véhicule à hydrogène (22) pour établir une liaison de communication sans fil (20) entre la station-service H₂ (4) et le véhicule à hydrogène (22),
- **caractérisé en ce que**
après la détection (44) par le véhicule à hydrogène (22) de la quantité de pression discrète généré par la station-service H₂ (4), le véhicule à hydrogène (22) effectue une mesure de temps pendant un premier intervalle de temps prédéterminable (t_{P}) pendant lequel la pression discrète détectée (P) doit être présente pour qu'elle puisse être considérée comme une pression discrète (P) générée délibérément pour établir une liaison de communication sans fil (20).

2. Procédé selon la revendication 1,
**caractérisé en ce que**
le signal de reconnaissance envoyé par le véhicule à hydrogène (22) comprend une information spécifique concernant le véhicule à hydrogène (22), l'information spécifique étant de préférence un identifiant du véhicule à hydrogène (22).

3. Procédé selon l'une quelconque des revendications précédentes,
**caractérisé en ce que**
le signal de reconnaissance envoyé par le véhicule à hydrogène (22) est séparé du signal de reconnaissance envoyé par la station-service H₂ (4) dépend de la pression discrète (P) générée, le signal de reconnaissance dépendant de préférence de la valeur de la pression discrète (P).

4. Procédé selon l'une quelconque des revendications précédentes,
**caractérisé en ce que**
le signal de détection envoyé par le véhicule à hydrogène (22) est basé sur une fréquence porteuse spécifique, un schéma de modulation et de codage (MCS) spécifique ou une technologie de transmission spécifique.

5. Procédé selon l'une quelconque des revendications précédentes,
**caractérisé en ce que**
le signal de reconnaissance envoyé par le véhicule à hydrogène (22) est recherché et/ou filtré par la station-service H2 en fonction de la pression discrète (P) générée par la station-service H₂ (4).

6. Procédé selon l'une quelconque des revendications précédentes,
**caractérisé en ce que**
la réalisation (50) d'une opération d'appairage entre la station-service H₂ (4) et le véhicule à hydrogène (22) est basée sur une norme de communication spécifique, ladite norme de communication étant de préférence choisie parmi l'une des suivantes : WLAN, Bluetooth, IEEE 802.11p, IEEE 1609.14, SAE2735, 5G.

7. Procédé selon l'une quelconque des revendications précédentes,
**caractérisé en ce qu'**
après une génération (42) d'une pression discrète (P) par la station-service H₂ (4), la station-service H₂ (4) lance une mesure de temps pour un deuxième intervalle de temps prédéterminable (to), au cours duquel l'établissement d'une liaison de communication sans fil (20) entre la station-service H₂ (4) et un véhicule à hydrogène (22) doit être enregistré pour que le procédé d'établissement d'une liaison de communication sans fil (20) ne soit pas interrompu.

8. Procédé selon l'une quelconque des revendications précédentes,
**caractérisé en ce qu'**
après avoir effectué (50) une opération d'appairage entre la station-service H₂ (4) et le véhicule à hydrogène (22) et l'établissement réussi d'une liaison de communication sans fil (20) entre la station-service H₂ (4) et le véhicule à hydrogène (22), une opération de paiement automatisée est lancée et/ou d'autres services supplémentaires sont fournis par la station-service H₂ (4).

9. Station-service H₂ (4) pour la mise en oeuvre d'un procédé selon l'une des revendications précédentes, comprenant :
- un robinet de soutirage (10) pour établir (40) un couplage mécanique avec une ouverture de réservoir (24) du véhicule à hydrogène (22),
- une unité de génération de pression (16) pour générer (42) une pression discrète (P) à l'intérieur de l'ouverture de réservoir (24) du véhicule à hydrogène (22),
- une unité de commande (14) pour détecter (48) un signal de reconnaissance provenant du véhicule à hydrogène (22),
- une unité de communication (18) pour recevoir un signal de reconnaissance et pour effectuer (50) une opération d'appairage entre la station-service H₂ (4) et le véhicule à hydrogène (22) pour établir une liaison de communication sans fil (20) entre la station-service H₂ (4) et le véhicule à hydrogène (22).

10. Station-service H₂ (4) selon la revendication 9,
**caractérisé en ce que**
l'unité de génération de pression (16) présente un réservoir (16a) rempli de gaz et soumis à une pression et/ou une soupape (16b) pour le réglage d'une pression spécifique et/ou une pompe (16c) pour la génération d'une surpression et/ou d'une dépression, le réservoir (16a) soumis à une pression étant de préférence formé sous la forme d'un réservoir d'hydrogène rempli d'hydrogène.

11. Station-service H₂ (4) selon la revendication 9 ou 10,
**caractérisé en ce qu'**
une colonne de distribution (6) est prévue pour recevoir des composants de la station-service H₂ (4), l'unité de génération de pression (16) étant de préférence disposée à l'intérieur de la colonne de distribution (6), en plus de l'unité de commande (14) et de l'unité de communication (18).

12. Station-service H₂ (4) selon les revendications 9 à 11,
**caractérisé en ce qu'**
un tuyau de gaz (8) est prévu pour la transmission d'une pression discrète (P) et/ou pour le transfert d'hydrogène d'un réservoir sous pression (16a) au robinet de soutirage (10).

13. Station-service H₂ (4) selon les revendications 9 à 12,
**caractérisé en ce qu'**
il est prévu un compteur de gaz (12) pour déterminer une quantité d'hydrogène transférée lors d'un processus de ravitaillement ainsi qu'un écran (30) pour afficher la quantité d'hydrogène actuellement transférée et/ou un prix de ravitaillement actuellement appliqué.

14. Système (2) pour établir une liaison de communication sans fil (20) selon un procédé selon l'une quelconque des revendications 1 à 8 précédentes, comprenant :
- une station-service H₂ (4) selon l'une quelconque des revendications 9 à 13,
- un véhicule à hydrogène (22),
- où tant les station-service H₂ (4) ainsi que le véhicule à hydrogène (22) présentent une unité de communication (18, 18') pour établir une liaison de communication sans fil (20), les unités de communication (18, 18') étant conçues de telle sorte qu'une liaison de communication sans fil (20) entre le véhicule à hydrogène (22) et la station-service H₂ (4) sur la base de l'un des standards de communication suivants : WLAN, Bluetooth, IEEE 802.11p, IEEE 1609.1-4, SAE2735, 5G.
